# EUROPEAN PATENT APPLICATION

(11) **EP 4 152 778 A1**
(43) Date of publication of application: **22.03.2023**
(21) Application number: 22195781.4
(22) Date of filing: 15.09.2022
(51) Int. Cl.: H04W 4/021, H04W 4/40

(54) **INFORMATION PROCESSING APPARATUS, INFORMATION PROCESSING SYSTEM AND INFORMATION PROCESSING METHOD**

(30) Priority: 21.09.2021 JP 2021153629
(71) Applicant: TOYOTA JIDOSHA KABUSHIKI KAISHA, Aichi-Ken 471-8571 (JP); Denso Ten Limited, Kobe-shi, Hyogo 652-8510 (JP)
(72) Inventor: ITO, Noriaki, Toyota-shi,, 471-8571 (JP); KAWASAKI, Hiroki, Toyota-shi,, 471-8571 (JP); NAKAGAWA, Hiroto, Toyota-shi,, 471-8571 (JP); IKEDA, Satoru, Kobe,, 652-8510 (JP)
(74) Representative: J A Kemp LLP

(57) **Abstract**

An information processing apparatus comprises a controller comprising at least one processor configured to, when a vehicle is in a service area of a predetermined wireless access point, provide a service corresponding to an identifier of the wireless access point for a driver of the vehicle.

## Description

### BACKGROUND

### Technical Field

The present disclosure relates to wireless communication.

### Description of the Related Art

There is a system that performs information provision to meet needs of users.

For example, Japanese Patent Laid-Open No. 2004-272361 discloses a system that acquires a list of services and articles that a user desires and gives guidance about actions required to meet the user's needs.

### SUMMARY

An object of the present disclosure is to enhance convenience for vehicle users.

The present disclosure in its one aspect provides an information processing apparatus comprising a controller comprising at least one processor configured to when a vehicle is in a service area of a predetermined wireless access point, provide a service corresponding to an identifier of the wireless access point for a driver of the vehicle.

The present disclosure in its another aspect provides an information processing system comprising: a first apparatus mounted on a vehicle and configured to perform communication with a predetermined wireless access point; and a second apparatus configured to, when the first apparatus is in a service area of the predetermined wireless access point, provide a service corresponding to an identifier of the wireless access point for a driver of the vehicle.

The present disclosure in its another aspect provides an information processing method comprising: a first step of receiving a wireless access point detection result from a vehicle; and a second step of providing a service corresponding to an identifier of the wireless access point detected by the vehicle for a driver of the vehicle.

Another aspect of the present disclosure is a program for causing a computer to execute the above information processing method or a computer-readable storage medium that non-transitorily stores the program.

According to the present disclosure, it is possible to enhance convenience for vehicle users.

### BRIEF DESCRIPTION OF THE DRAWINGS

Fig. 1 is a schematic diagram of a vehicle system according to a first embodiment;
Fig. 2 is a diagram illustrating components that a vehicle according to the first embodiment has;
Fig. 3 is a schematic diagram illustrating function modules that a controller 101 has;
Fig. 4 is a system overview diagram of a server apparatus;
Fig. 5 illustrates an example of service data that the server apparatus stores;
Fig. 6 is a flowchart of a service provision process in the first embodiment;
Fig. 7 illustrates an example of a service request transmitted from a DCM;
Fig. 8 is a flowchart of a process executed at step S14;
Fig. 9A illustrates an example of a screen provided on an in-vehicle apparatus;
Fig. 9B illustrates an example of the screen provided on the in-vehicle apparatus;
Fig. 10 is a flowchart of a service provision process in a modification;
Fig. 11 illustrates service data in a second embodiment;
Fig. 12 is a diagram illustrating an area where a service is provided; and
Fig. 13 is a flowchart of a process executed at step S13 in the second embodiment.

### DESCRIPTION OF THE EMBODIMENTS

Recently, automobiles capable of network connection have been widespread. By an in-vehicle apparatus providing network connection, a service of supporting a driver at emergency and a service about security can be provided. Such an apparatus is also called a data communication module (DCM).

Further, it has been attempted to provide an appropriate service according to a position of a vehicle. For example, by the DCM transmitting position information about a vehicle to a server apparatus, the server apparatus can provide a service corresponding to the position.

For example, it becomes possible to notify congestion information about a parking lot at a timing when a vehicle arrives at a commercial facility and to provide a menu book at a timing when a vehicle arrives at a restaurant. Further, it becomes possible to cause indoor lighting and air conditioning to operate, or release a security system at a timing when a vehicle arrives home.

In the case of providing a service using only position information, however, there is a problem that, depending on an environment, it is not possible to make an accurate determination. For example, when a parking lot is indoors or in a basement, it is difficult to accurately determine a position of a vehicle.

An information processing apparatus according to the present disclosure solves such a problem.

An information processing apparatus according to an aspect of the present disclosure comprises a controller configured to, when a vehicle is in a service area of a predetermined wireless access point, provide a service corresponding to an identifier of the wireless access point for a driver of the vehicle.

The vehicle according to the present disclosure performs wireless communication via the predetermined wireless access point, using a wireless communication standard, for example, IEEE 802.11.

The information processing apparatus is configured to be capable of providing the service corresponding to the identifier of the wireless access point detected by the vehicle.

The service may be such that provides information for the driver of the vehicle or may be such that controls predetermined equipment related to the driver of the vehicle. For example, if the identifier corresponds to a predetermined commercial facility, it is possible to provide information related to the parking lot, shops and the like of the commercial facility. If the identifier corresponds to a predetermined restaurant, it is possible to provide a menu provided by the restaurant and access to an order page. Furthermore, if the identifier corresponds to the home, it is possible to control equipment connected to a home network.

The information processing apparatus may be an in-vehicle apparatus mounted on the vehicle or may be a server apparatus capable of communicating with the vehicle. In the case of the latter, the detected identifier may be received from the apparatus mounted on the vehicle to execute the corresponding service. Further, the detected identifier may be received from the apparatus mounted on the vehicle to instruct the apparatus to execute the corresponding service. "To provide a service" includes to instruct an external apparatus to execute the service.

Further, another aspect of the present disclosure is an information processing system comprising: a first apparatus mounted on a vehicle and configured to perform communication with a predetermined wireless access point; and a second apparatus configured to, when the first apparatus is in a service area of the predetermined wireless access point, provide a service corresponding to an identifier of the wireless access point for a driver of the vehicle.

The first apparatus is, for example, a wireless communication apparatus mounted on the vehicle. The second apparatus may be an in-vehicle terminal mounted on the vehicle or may be a server apparatus capable of communicating with the first apparatus. The second apparatus provides a predetermined service for the driver of the vehicle based on a result of communicating with the first apparatus.

Specific embodiments of the present disclosure will be described below based on drawings. A hardware configuration, a module configuration, a functional configuration and the like described in each embodiment are not intended to limit the technical scope of the disclosure only thereto unless otherwise stated.

### (First embodiment)

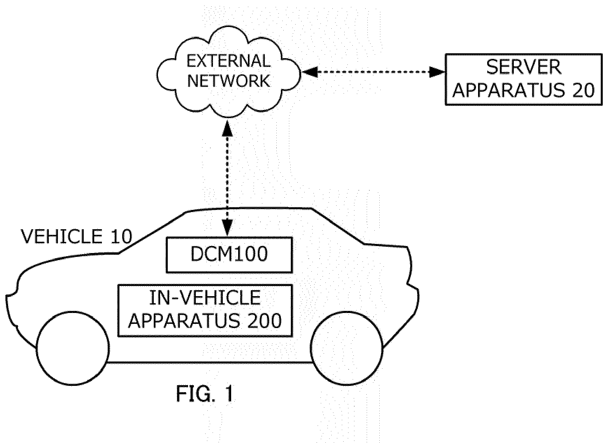

An overview of a vehicle system according to a first embodiment will be described with reference to Fig. 1. The vehicle system according to the present embodiment is configured including a vehicle 10 and a server apparatus 20.

The vehicle 10 is a connected car having a function of communicating with an external network. The vehicle 10 is configured including a DCM (data communication module) 100 and an in-vehicle apparatus 200.

The DCM 100 is an apparatus that performs wireless communication with an external network. The DCM 100 functions as a gateway for connecting a component that the vehicle 10 has (hereinafter, a vehicle component) to an external network. For example, the DCM 100 provides access to an external network for the in-vehicle apparatus 200 that the vehicle 10 has. Thereby, the in-vehicle apparatus 200 can communicate with a server apparatus connected to the network via the DCM 100.

The DCM 100 is configured to be communicable via a cellular communication network and a local network.

The cellular communication network is a communication network using a cellular network. The DCM 100 stores information about a cellular communication contract. When detecting an available cellular communication network, the DCM 100 attaches to the cellular communication network.

The local network is such a network that connection thereto is provided by a predetermined wireless access point, for example, a home network or a public wireless LAN network. For example, in the case of using a home network constructed in a home as the local network, the vehicle 10 can perform communication within a predetermined range around the home. The DCM 100 stores information about a plurality of wireless access points. When detecting an available access point, the DCM 100 connects to the access point.

The in-vehicle apparatus 200 is an apparatus that provides information for a driver of the vehicle 10. The in-vehicle apparatus 200 is also called a car navigation apparatus, an infotainment apparatus or a head unit. It is possible to provide navigation and entertainment for the driver of the vehicle by the in-vehicle apparatus 200. The in-vehicle apparatus 200 may download traffic information, road map data, music, video and the like via the DCM 100.

The server apparatus 20 is an apparatus that provides a predetermined service for the driver of the vehicle 10 based on a result of communicating with the DCM 100. The predetermined service may be a service of providing information or may be a service of controlling predetermined equipment.

For example, if determining that the vehicle 10 has arrived at a predetermined commercial facility, based on a result of communicating with the DCM 100, the server apparatus 20 provides information about the commercial facility for the driver of the vehicle 10. If determining that the vehicle 10 has arrived at the owner's home, the server apparatus 20 transmits an instruction to release security to the home network. Thereby, it is possible to give convenience to the user.

It has hitherto been possible to perform such a service based on position information about the vehicle 10. In a system using a signal from the GPS satellite, however, there may be a case where it is difficult to acquire accurate position information. Therefore, in the vehicle system according to the present embodiment, the DCM 100 transmits information about a currently detected access point to the server apparatus 20, and the server apparatus 20 decides a service to be provided for the vehicle 10 based on the information. For example, when the vehicle 10 detects an access point of a public wireless LAN provided in a predetermined commercial facility, the server apparatus 20 can provide information about the commercial facility for the driver of the vehicle 10 in response thereto.

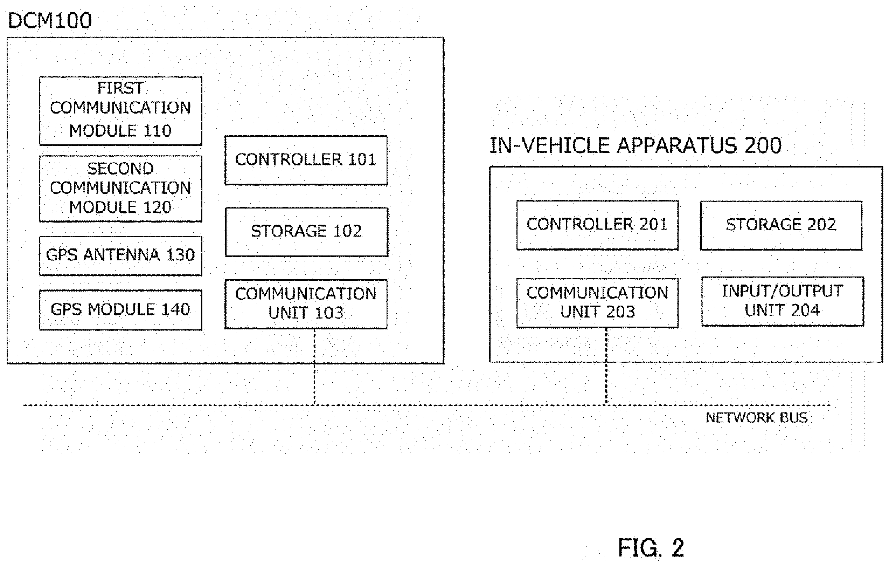

Fig. 2 is a diagram illustrating components that the vehicle 10 according to the present embodiment has. The vehicle 10 according to the present embodiment is configured including the DCM 100 and the in-vehicle apparatus 200.

The DCM 100 is configured having a first communication module 110, a second communication module 120, a GPS antenna 130, a GPS module 140, a controller 101, a storage 102 and a communication unit 103.

The first communication module 110 is a communication module that performs communication with the outside by cellular communication. The first communication module 110 is configured including antenna elements that perform input/output of wireless signals. In the present embodiment, the antenna elements are those that are in conformity with mobile communication (for example, 3G, LTE, 5G and the like).

The second communication module 120 is a communication module that performs communication with the outside based on a standard for communication other than cellular communication. As communication standards that the second communication module 120 can adopt, Wi-Fi (registered trademark), DSRC (Dedicated Short Range Communications), millimeter wave communication and the like can be exemplified. The second communication module 120 is configured including antenna elements that perform input/output of wireless signals, similarly to the first communication module. The antenna may be configured including a plurality of physical antennas. For example, in the case of performing communication using high frequency band radio waves such as microwaves or millimeter waves, the plurality of antennas may be distributedly arranged to stabilize the communication.

In the present embodiment, the second communication module 120 performs communication using Wi-Fi.

The GPS antenna 130 is an antenna that receives a positioning signal transmitted from a positioning satellite (also referred to as a GNSS satellite).

The GPS module 140 is a module that calculates position information based on a signal received by the GPS antenna 130.

The controller 101 is an arithmetic unit that realizes various kinds of functions of the DCM 100 by executing a predetermined program. The controller 101 may be realized, for example, by a CPU or the like.

The controller 101 executes a function of causing the DCM 100 to connect to an external network via either a cellular communication network or a local network.

The controller 101 executes a function of mediating communication made between an external network and a component that the vehicle 10 has (a vehicle component). For example, when a certain vehicle component requires communication with an external network, the controller 101 executes a function of relaying data transmitted from the vehicle component to the external network. Further, the controller 101 executes a function of receiving data transmitted from the external network and transferring the data to an appropriate vehicle component.

Furthermore, the controller 101 can execute functions specific to the DCM 100. For example, the controller 101 is configured to be capable of executing monitoring and telephone conversation functions of a security system and can make a security report, an emergency report and the like based on a trigger that has occurred in the vehicle 10.

The storage 102 is a memory device that includes a main memory and an auxiliary storage device. In the auxiliary storage device, an operating system (OS), various kinds of programs, various kinds of tables and the like are stored. By loading a program stored therein to the main memory and executing the program, each function that meets a predetermined purpose as described later can be realized.

The communication unit 103 is an interface unit for connecting the DCM 100 to an in-vehicle network. In the present embodiment, the plurality of vehicle components including the in-vehicle apparatus 200 are mutually connected via a bus of the in-vehicle network. As a standard of the in-vehicle network, for example, CAN (Controller Area Network) can be exemplified. When the in-vehicle network is such that uses a plurality of standards, the communication unit 103 may have a plurality of interface devices corresponding to standards of communication destinations. As a communication standard other than CAN, for example, Ethernet (registered trademark) can be exemplified.

The DCM 100 may be configured to be operational independent from the other components that the vehicle 10 has. For example, the DCM 100 may internally include an auxiliary battery so as to be operational alone without depending on an external power source. According to such a configuration, even if another component of the vehicle 10 malfunctions (for example, a power supply malfunction) due to a traffic accident or the like, it is possible to make an emergency report and the like.

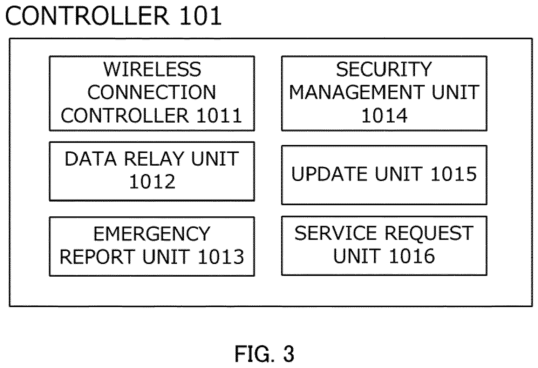

Next, functions executed by the controller 101 will be described. Fig. 3 is a schematic diagram illustrating function modules that the controller 101 has. Each of the function modules that the controller 101 has can be realized by executing a program stored in storage such as a ROM by the controller 101.

The controller 101 is configured having function modules of a wireless connection controller 1011, a data relay unit 1012, an emergency report unit 1013, a security management unit 1014, an update unit 1015 and a service request unit 1016.

The wireless connection controller 1011 controls wireless connection using the first communication module 110 and the second communication module 120. The wireless connection controller 1011 manages information required for wireless connection, and performs connection to a cellular communication network and a local network via the first communication module 110 and the second communication module 120 under a situation where the networks are available.

When both of a cellular communication network and a local network are available, the wireless connection controller 1011 gives priority to the local network to perform communication.

The data relay unit 1012 relays data transmitted/received between vehicle components. For example, the data relay unit 1012 executes a process of receiving a message sent out by a first apparatus connected to the in-vehicle network and, when necessary, transferring the message to a second apparatus connected to the in-vehicle network. The first and second apparatuses may be onboard electronic control units (ECUs) or may be other vehicle components.

When receiving a message addressed to an external network from a vehicle component, the data relay unit 1012 relays the message to the external network. Further, the data relay unit 1012 receives data transmitted from an external network and transfers the data to an appropriate vehicle component.

When an abnormal situation occurs on the vehicle 10, the emergency report unit 1013 makes an emergency report to an operator outside the vehicle 10. As an example of the abnormal situation, occurrence of a traffic accident or a vehicle breakdown is given. When a predetermined trigger, for example, a call button provided in the vehicle 10 being pressed or an airbag being developed occurs, the emergency report unit 1013 starts connection with the operator and enables telephone conversation between the driver of the vehicle 10 and the operator. At the time of making the emergency report, the emergency report unit 1013 may transmit position information about the vehicle to the operator. In this case, the emergency report unit 1013 may acquire the position information from the GPS module 140.

The security management unit 1014 performs a security monitoring process. The security management unit 1014 detects that the vehicle has been unlocked not by a regular procedure, based on data received from an ECU that is responsible for electronic lock of the vehicle 10, and transmits a security report to a predetermined apparatus. The security report may include position information about the vehicle. In this case, the security management unit 1014 may acquire the position information from the GPS module 140. When determining that a security problem of the vehicle 10 has occurred, the security management unit 1014 may acquire the position information and periodically transmit the acquired position information to a server apparatus specified in advance.

The update unit 1015 updates software used by the DCM 100 or the electronic control units (the ECUs) that the vehicle 10 has. For example, the update unit 1015 manages versions of pieces of firmware stored in the plurality of ECUs, and, when new firmware is provided by a server apparatus, the update unit 1015 downloads the firmware via a network and executes a process of applying the firmware to a target apparatus.

The service request unit 1016 transmits a request to request a service (hereinafter, a service request) to the server apparatus 20 to cause the server apparatus 20 to provide the service. In the present embodiment, the service request includes an identifier of an access point currently detected by the DCM 100, specifically, a wireless LAN SSID (service set identifier).

The server apparatus 20 stores associations between SSIDs and services, and provides a service in response to a received service request. A specific method will be described later.

Though the emergency report function, the security function, the software update function and the service request function have been given as specific functions provided by the DCM 100 here, functions that the DCM 100 has may include other functions. For example, it is possible to cause the DCM 100 to have a function of performing driving diagnosis, a function of monitoring a state of a driver, a function of performing energy management and the like.

Next, the in-vehicle apparatus 200 will be described.

The in-vehicle apparatus 200 is an apparatus that provides information for the driver of the vehicle 10 and is also called a car navigation system, an infotainment system or a head unit. The in-vehicle apparatus 200 is capable of providing navigation and entertainment for the driver of the vehicle 10. The in-vehicle apparatus 200 may have a function of downloading traffic information, road map data, music, video and the like by communicating with an external network of the vehicle 10. Further, the in-vehicle apparatus 200 may be an apparatus in cooperation with a smartphone or the like.

Further, the in-vehicle apparatus 200 also functions as a front end of the DCM 100. For example, when the DCM 100 executes a predetermined process (for example, emergency report), the in-vehicle apparatus 200 performs input/output of information related to the process (for example, display of an operator call status).

The in-vehicle apparatus 200 can be configured as a computer having a processor such as a CPU or a GPU, a main memory such as a RAM and a ROM, and an auxiliary storage device such as an EPROM, a hard disk drive and a removable medium. In the auxiliary storage device, an operating system (OS), various kinds of programs, various kinds of tables and the like are stored. By executing a program stored therein, each function meeting a predetermined purpose as described later can be realized. However, a part or all of the functions may be realized by a hardware circuit such as an ASIC or an FPGA.

The in-vehicle apparatus 200 is configured having a controller 201, a storage 202, a communication unit 203 and an input/output unit 204.

The controller 201 is a unit responsible for control of the in-vehicle apparatus 200. The controller 201 is configured with an information processing unit, for example, a CPU (central processing unit) or a GPU (graphics processing unit).

The controller 201 provides information for the driver of the vehicle 10. As the provided information, there are, for example, traffic information, navigation information, music and video, radio broadcast and digital TV broadcast. The controller 201 outputs information via the input/output unit 204.

The storage 202 is a unit configured to store information and configured with a storage medium such as a RAM, a magnetic disk or a flash memory. In the storage 202, various kinds of programs executed by the controller 201 and data and the like used by the programs are stored.

The communication unit 203 is a communication interface that connects the in-vehicle apparatus 200 to the bus of the in-vehicle network.

The input/output unit 204 is a unit configured to accept an input operation performed by the user and presenting information to the user. Specifically, the input/output unit 204 is configured with a touch panel and control unit therefor and a liquid crystal display and control unit therefor. The touch panel and the liquid crystal display are configured with one touch panel display in the present embodiment. Further, the input/output unit 204 may have a speaker or the like for outputting voice.

The network bus is a communication bus constituting the in-vehicle network. Though one bus is illustrated in this example, the vehicle 10 may have two or more communication buses. The plurality of communication buses may be mutually connected by the DCM 100 or a gateway that gathers the plurality of communication buses.

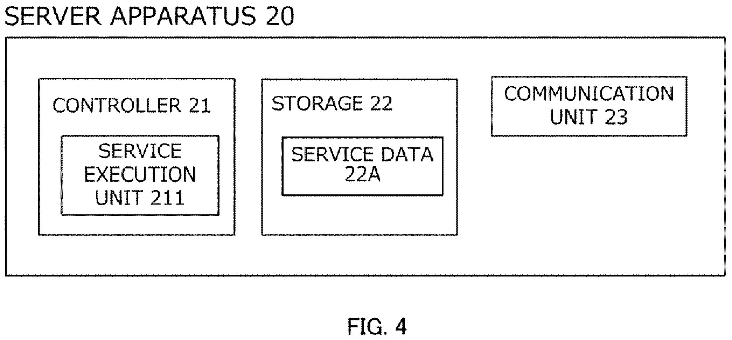

Next, the server apparatus 20 will be described. Fig. 4 is a schematic diagram of the server apparatus 20 in the first embodiment.

The server apparatus 20 is an apparatus that provides a predetermined service in response to a service request transmitted from the DCM 100. The predetermined service may be an information provision service or may be a service of controlling predetermined equipment.

If a target service is an information provision service, the server apparatus 20 transmits generated or acquired information to the in-vehicle apparatus 200 via the DCM 100. Thereby, information about a store, information about traffic and the like can be communicated to the user. If a target service is an equipment control service, the server apparatus 20 generates a command to equipment and transmits the command via a network.

The server apparatus 20 can be configured as a computer having a processor such as a CPU or a GPU, a main memory such as a RAM and a ROM, and an auxiliary storage device such as an EPROM, a disk drive and a removable medium.

The server apparatus 20 is configured including a controller 21, a storage 22 and a communication unit 23.

The controller 21 is an arithmetic device responsible for control that the server apparatus 20 performs. The controller 21 can be realized by an arithmetic processing device such as a CPU.

The controller 21 is configured having a service execution unit 211 as a function module. The function module may be realized by executing a stored program by the CPU.

The service execution unit 211 executes a predetermined process for providing a service, in response to a service request acquired from the DCM 100. The server apparatus 20 stores data in which each wireless LAN SSID and details of a service are associated (service data), and the service execution unit 211 executes the predetermined process by referring to the service data.

In the present embodiment, the service execution unit 211 is configured to be capable of providing the following three kinds of services:

### (Type 1) Equipment control service

A service of issuing a control command to equipment registered beforehand, such as lighting equipment and air-conditioning equipment connected to the home network.

### (Type 2) Information provision service by the Web

A service of issuing an instruction to cause a corresponding web page to be displayed to a predetermined apparatus (such as the in-vehicle apparatus 200) and performing information provision via a browser.

### (Type 3) Information provision service by an application

A service of issuing an instruction to cause corresponding application software to be executed to a predetermined apparatus (such as the in-vehicle apparatus 200) and performing information provision via the application software.

The storage 22 is configured including a main memory and an auxiliary storage device. The main memory is a memory where programs executed by the controller 21 and data used by the control program are developed. The auxiliary storage device is a device where the programs executed by the controller 21 and the data used by the control programs are stored.

Furthermore, the storage 22 stores service data 22A.

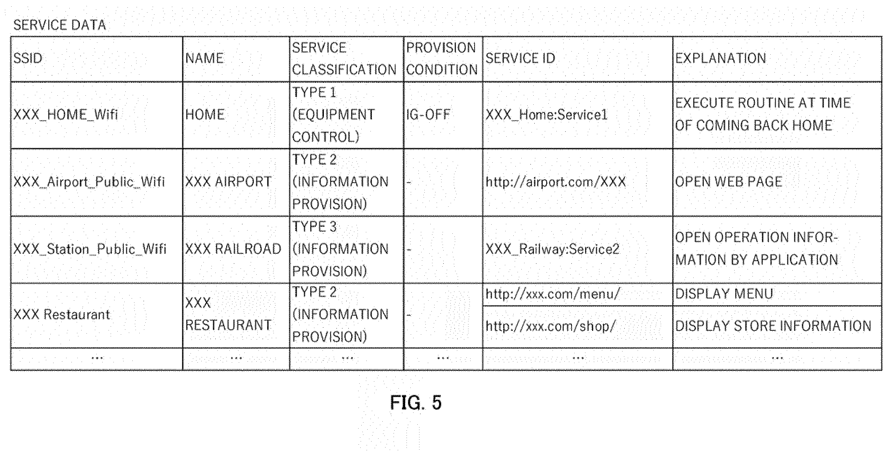

Fig. 5 illustrates an example of service data in the present embodiment. The service data is configured having fields of access point SSID, access point name, service classification, service provision condition, and service ID.

An SSID is a character string that identifies an access point. In each SSID field, an SSID in a complete form may be stored, or only a character string indicating a part of the SSID may be stored.

The service classification field is a field in which the classification of a service is stored. In the present embodiment, the three kinds of service classifications described before are defined.

The provision condition field is a field in which a condition for providing a service is stored. In this field, for example, a condition of "providing a service only when the ignition of the vehicle 10 is off (IG-OFF)" can be stored.

The service ID field is a field in which data for identifying a service is stored. If the service classification is "information provision", data for identifying information to be provided is stored in the service ID field. As such data, for example, the URL of a web page and an identifier of application software for performing information provision are given. If the service classification is "equipment control", data for identifying content of control is stored in the service ID field. As such data, for example, data specifying target equipment, content of an operation or an operation sequence is given.

For example, in the case of performing information provision by a web page, the URL of the web page can be written in the service ID field. In the case of performing information provision by application software, the identifier of the application software to be activated can be written in the service ID field.

In the illustrated example, it is defined that, when an SSID of "XXX_Airport_Public_Wifi" is detected, a web page of an airport is displayed. Further, it is defined that, when an SSID of "XXX_Station_Public_Wifi" is detected, application software provided by a railroad company is activated to display operation information. Further, it is defined that, when an SSID of "XXX_HOME_Wifi" is detected, a routine of "Service1" is executed for an equipment group defined by "XXX_Home".

The communication unit 23 is a communication interface for connecting the server apparatus 20 to a network. The communication unit 23 is configured, including, for example, a network interface board and a wireless communication interface for wireless communication.

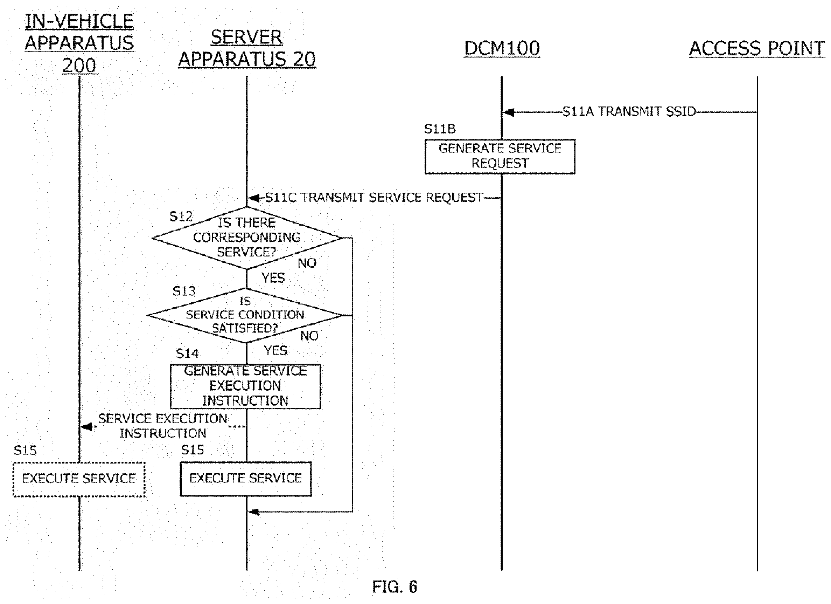

Next, description will be made on a process for the server apparatus 20 to provide a service based on an SSID detected by the vehicle 10. Fig. 6 is a flowchart illustrating an overview of the process.

First, at step S11A, the DCM 100 receives an SSID broadcast by an access point. Next, the DCM 100 (the service request unit 1016) generates a service request that includes the received SSID (step S11B).

The service request is generated when the DCM 100 is in the service area of the access point. In other words, even if the DCM 100 has detected the access point, the service request is not generated when a signal is so weak that sufficient communication cannot be performed. Whether the DCM 100 is in the service area of the access point or not may be determined based on electric field strength.

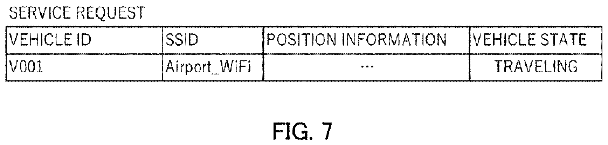

Fig. 7 illustrates an example of the service request. In the present embodiment, the service request includes an identifier of the vehicle 10, a detected SSID, position information about the vehicle 10 (for example, a latitude and a longitude) and data about the state of the vehicle 10 (vehicle information).

The vehicle information can be, for example, data indicating the state of a travel system, whether the ignition has been turned on or not, whether the engine is operating or not, whether the vehicle 10 is traveling or not, and the like. The generated service request is transmitted to the server apparatus 20 (step S11C).

If the DCM 100 has detected a plurality of SSIDs, an SSID corresponding to an access point with the highest electric field strength may be transmitted, or the plurality of SSIDs may be transmitted. In the case of transmitting the plurality of SSIDs, electric field strengths may be associated with the plurality of SSIDs, respectively.

At step S12, the server apparatus 20 (the service execution unit 211) refers to the service data 22A and determines whether there is a service corresponding to the SSID included in the service request. If there is a corresponding service, the process proceeds to step S13. If there is not a corresponding service, the process ends.

Comparison of the SSID may be performed by perfect matching or by partial matching. In the case of performing comparison by partial matching, only a part of the character string of each SSID may be stored in the service data.

For example, if character string "XXX_Railway" is defined in the service data, it can be hit for a plurality of SSIDs such as "XXX_Railway_A_Station" and "XXX_Railway_B_Station".

At step S13, the server apparatus 20 (the service execution unit 211) determines whether a condition for providing the service is satisfied or not. If service provision conditions are included in the service data, the service execution unit 211 refers to, for example, the vehicle state included in the service request to decide whether the service can be provided or not. Consideration will be made, for example, on a case where it is defined in a provision condition field of the service data that "the service is provided only when the ignition of a vehicle is off". In this case, when the state of the ignition of the vehicle 10 is "off", the service execution unit 211 decides that the service is to be provided.

If the condition for providing the service is satisfied, the process transitions to step S14. If the condition for providing the service is not satisfied, the process ends.

At step S14, the server apparatus 20 (the service execution unit 211) generates a service execution instruction.

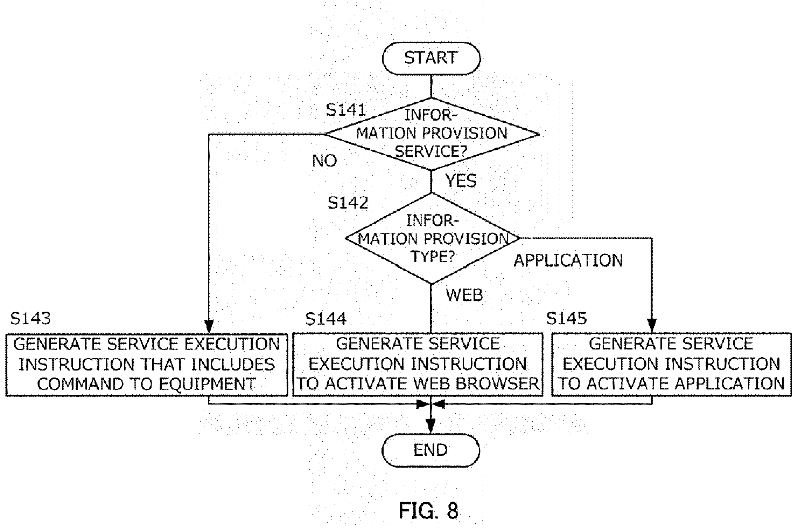

Here, details of the process executed at step S14 will be described with reference to Fig. 8.

At step S141, it is determined whether the service classification is "information provision" or not.

Here, if the service classification is "information provision", the service execution unit 211 determines the type of information provision at step S142.

If the type of information provision is "information provision by the Web", a service execution instruction that includes the address of a web page, which is an information source, is generated (step S144). In this case, the service execution instruction is transmitted to an apparatus that executes a browser (typically, the in-vehicle apparatus 200). The in-vehicle apparatus 200 performs information provision by opening the specified web page (step S15).

If the type of information provision is "information provision by application software", a service execution instruction that includes an identifier identifying application software for performing information provision is generated (step S145). In this case, the service execution instruction is transmitted to an apparatus that executes the application software (typically, the in-vehicle apparatus 200). The in-vehicle apparatus 200 performs information provision by executing the specified application software (step S15).

If the service classification is "equipment control", the process transitions from step S141 to S143, and the service execution unit 211 generates a service execution instruction that includes a command for controlling target equipment. In this case, the service execution instruction is processed by the server apparatus 20, and a command is transmitted to an external apparatus for controlling the equipment (step S15).

Before the service is provided at step S15, the in-vehicle apparatus 200 may confirm the user about the provision.

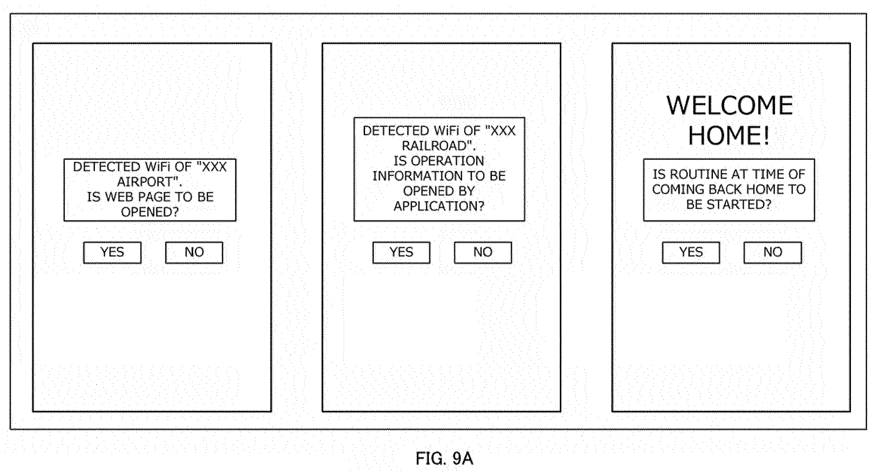

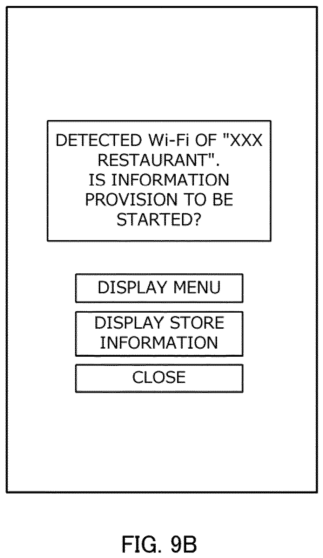

Fig. 9A illustrates an example of a screen to confirm whether or not to provide a service. When a plurality of services are associated with the same SSID, which service is to be provided may be selected by the user. Fig. 9B illustrates an example of a screen to cause the user to select any of a plurality of services. In this example, a service of "display a menu" and a service of "display store information" are presented as choices.

When the DCM 100 has detected a plurality of SSIDs, and a service request includes the plurality of SSIDs, the process from step S12 to step S15 may be executed individually for each SSID. In this case, the SSIDs may be prioritized so that services are provided according to priority. The priority may be decided based on electric field strength. For example, it is possible to execute a process for top three access points in order of signal strength. Which service is to be provided may be selected by the user.

When step S15 is executed by the in-vehicle apparatus 200, it may be a service provision condition that the DCM 100 is currently connected to the target access point. This is because, for example, there may be a case where provision of information about a commercial facility (for example, congestion information about a parking lot) is performed only on a local network provided by the commercial facility.

As described above, according to the first embodiment, a predetermined service can be provided for the driver of the vehicle 10 according to the identifier of an access point detected by the vehicle 10. Thereby, the driver of the vehicle 10 can receive provision of (or confirmation about being provided with) a service only by entering a service area, and it is possible to enhance convenience.

For example, it becomes possible to quickly access application software or a web page for a mobile order at a timing when the user arrives at a fast food store. Further, it becomes possible to perform a process of releasing home security and causing lighting and air conditioning to operate or the like at a timing when the user arrives home. Further, it becomes possible to stamp an attendance record at a timing when the user arrives at his workplace.

### (Modification of first embodiment)

Though the server apparatus 20 identifies a service based on an SSID received from the vehicle 10 (the DCM 100) in the first embodiment, this process may be executed by the DCM 100. Therefore, the service data may be stored in the DCM 100.

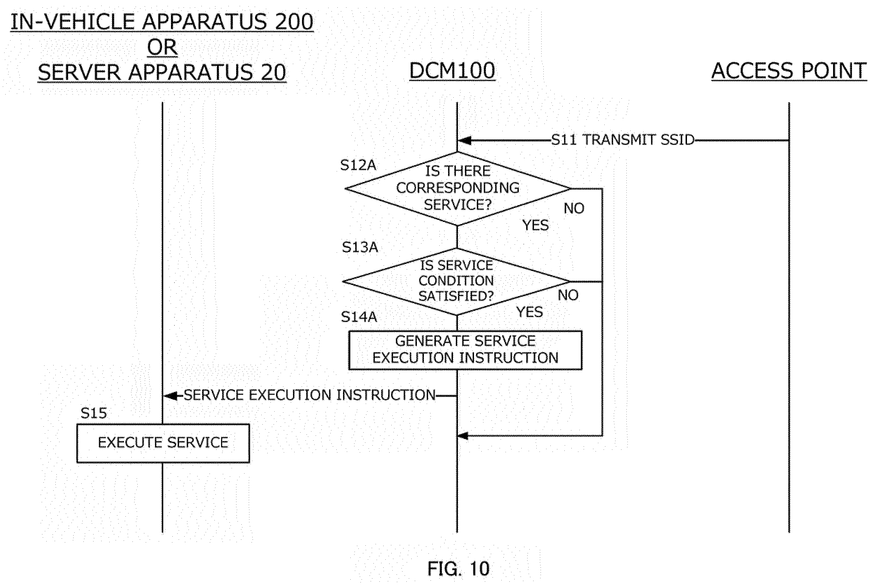

Fig. 10 is a flowchart in the present modification. Steps S12A, 13A and 14A correspond to steps S12, 13 and 14 in the first embodiment, respectively. In the present modification, the DCM 100 determines whether a service is to be executed or not and generates a service execution instruction. If the service classification is "information provision", the service execution instruction is transmitted to the in-vehicle apparatus 200. If the service classification is "equipment control", the service execution instruction is transmitted to the server apparatus 20.

Other operations are similar to those of the first embodiment.

In the present modification, the service data is stored in the storage 102 of the DCM 100. The server apparatus 20 may distribute the service data to a plurality of vehicles, and each DCM 100 may receive and store (or update) the service data.

### (Second embodiment)

In the first embodiment, content of a service is determined based on only an SSID. However, there may be a case where an accurate service cannot be provided for the user only with an SSID. For example, when a common SSID is used among a plurality of group stores, there may be a case where a service according to a place cannot be provided.

To deal with the above, the second embodiment is an embodiment in which position information is also used to provide a service.

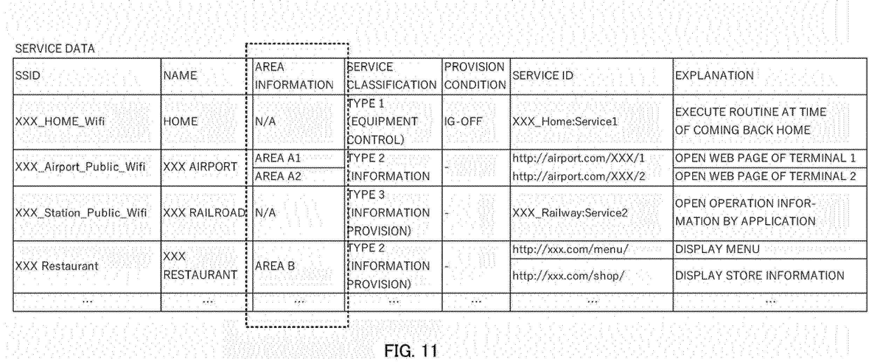

Fig. 11 illustrates an example of the service data 22A stored in the server apparatus 20 in the second embodiment. The service data in the second embodiment is different from that in the first embodiment in further having fields in which area information is stored. The area information is for defining an area where a service is provided.

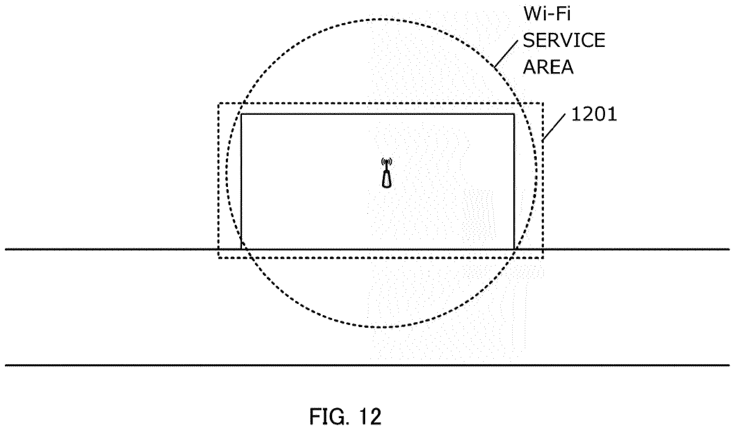

Fig. 12 is a diagram illustrating an area where a service is provided. An area indicated by reference sign 1201 in Fig. 12 is an area where a service is provided (hereinafter, a service provision area). As illustrated, the service provision area and a Wi-Fi service area partially overlap. In the second embodiment, a service is provided when the DCM 100 is in the overlapping area. The area information included in the service data may be in any format if the area information can define a service provision area. For example, the area information may be position information about an access point, or may be information that directly defines a service provision area. When the position information about an access point is stored, a predetermined range around the position of the access point is the service provision area.

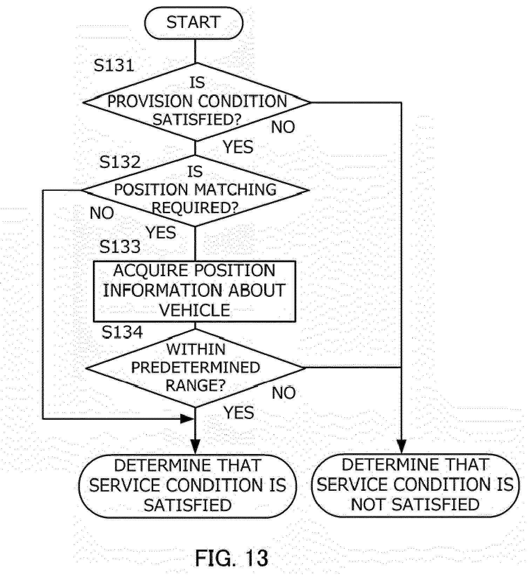

Fig. 13 is a flowchart of a process executed at step S13 in the second embodiment. The illustrated process is executed by the server apparatus 20 (the service execution unit 211).

First, at step S131, it is determined whether a condition for providing a service is satisfied or not. A method for the determination is similar to that described for step S13 of the first embodiment. Here, if the condition for providing the service is not satisfied, the process ends. If the condition for providing the service is satisfied, the process transitions to step S132.

At step S132, it is determined whether position matching is required or not.

Here, if area information is defined for each service that the service data has, it is determined that position matching is required. In the example of Fig. 11, if a detected SSID is "XXX_Airport_Public_Wifi", it is determined that position matching is required because areas A1 and A2 are defined. If the detected SSID is "XXX_HOME_Wifi", it is determined that position matching is not required because area information is not defined. If position matching is required, the process transitions to step S133. If position matching is not required, it is determined that the service condition is satisfied, and the process ends.

At step S133, position information about the vehicle 10 is acquired. The position information is included in a service request transmitted from the vehicle 10.

At step S134, it is determined whether the vehicle 10 is located in an area defined by the service data or not. For example, if "area A1" and "area A2" are defined in the service data, it is determined which of the area A1 and the area A2 the position of the vehicle 10 is included in. If the vehicle 10 is located within a range defined by the service data, it is determined that the service condition is satisfied. Otherwise, it is determined that the service condition is not satisfied.

A process at and after step S14 is similar to that of the first embodiment.

If a plurality of areas are defined for the same SSID, services associated with the corresponding areas are executed at steps S14 and S15. For example, if the vehicle 10 is in the area A1 in the example of Fig. 11, a service of "open web page of airport terminal 1" is executed; and, if the vehicle 10 is in the area A2, a service of "open web page of airport terminal 2" is executed.

As described above, in the second embodiment, position information is also used to decide whether a service is to be provided or not. Thereby, it becomes possible to more accurately decide a service to be provided.

### (Modifications)

The embodiments described above are mere examples, and the present disclosure can be appropriately changed and practiced within a range not departing from the spirit thereof.

For example, the processes and units described in the present disclosure can be freely combined and implemented as far as technological contradiction does not occur.

Though an example of performing information provision by the in-vehicle apparatus 200 is given in the description of the embodiments, information provision may be performed using another information terminal in the vehicle 10. For example, the DCM 100 or the server apparatus 20 may communicate with a mobile terminal (such as a smartphone) that the driver possesses so that information provision is performed via the mobile terminal. In this case, the DCM 100 or the server apparatus 20 may issue a service execution instruction to the mobile terminal.

In addition, the processing described as being performed by one device may be shared and executed by a plurality of devices. Alternatively, the processing described as being performed by different devices may be executed by one device. In a computer system, what hardware configuration (server configuration) realizes each function can be flexibly changed.

The present disclosure can also be realized by supplying a computer program including the functions described in the above embodiments to a computer and causing one or more processors included in the computer to read and execute the program. Such a computer program may be provided to the computer by a non-transitory computer-readable storage medium connectable to a system bus of the computer, or may be provided to the computer via a network. Examples of non-transitory computer readable storage media include: any type of disk such as a magnetic disk (floppy (registered trademark) disk, hard disk drive (HDD), etc.), an optical disk (CD-ROM, DVD disk, Blu-ray disk, etc.); and any type of medium suitable for storing electronic instructions, such as read-only memory (ROM), random access memory (RAM), EPROM, EEPROM, magnetic cards, flash memory, and optical cards.

## Claims

1. An information processing apparatus comprising a controller comprising at least one processor configured to
when a vehicle is in a service area of a predetermined wireless access point, provide a service corresponding to an identifier of the wireless access point for a driver of the vehicle.

2. The information processing apparatus according to claim 1, further comprising
a storage configured to store service data in which the identifier and content of the service are associated.

3. The information processing apparatus according to claim 2, wherein at least one of:
the service includes an information provision service, and the service data is data in which the identifier and data for identifying information to be provided are associated; and
the service includes a service to control predetermined equipment; and the service data is data in which the identifier and content of the control are associated.

4. The information processing apparatus according to claim 2 or 3, wherein
the controller further acquires position information about the vehicle; and
if the position information indicates a position in a predetermined range corresponding to the identifier, the service corresponding to the identifier is provided.

5. The information processing apparatus according to claim 4, wherein at least one of:
the storage further stores a relationship between the identifier and the predetermined range; and
the storage stores the identifier and position information about the wireless access point having the identifier in association with each other, and the predetermined range is set with a position of the wireless access point having the identifier as a reference.

6. The information processing apparatus according to any preceding claim, wherein
the controller acquires the identifier of the wireless access point detected by the vehicle, from the vehicle.

7. The information processing apparatus according to any preceding claim, wherein
the identifier is an SSID (service set identifier).

8. An information processing system comprising:
a first apparatus mounted on a vehicle and configured to perform communication with a predetermined wireless access point; and
a second apparatus configured to, when the first apparatus is in a service area of the predetermined wireless access point, provide a service corresponding to an identifier of the wireless access point for a driver of the vehicle.

9. The information processing system according to claim 8, wherein
the second apparatus further comprises a storage configured to store service data in which the identifier and content of the service are associated.

10. The information processing system according to claim 9, wherein at least one of:
the service includes an information provision service, and the service data is data in which the identifier and data for identifying information to be provided are associated; and
the service includes a service to control predetermined equipment, and the service data is data in which the identifier and content of the control are associated.

11. The information processing system according to claim 9 or 10, wherein
the first apparatus transmits position information about the vehicle to the second apparatus; and
if the position information indicates a position in a predetermined range corresponding to the identifier, the second apparatus provides the service corresponding to the identifier.

12. The information processing system according to claim 11, wherein at least one of:
the storage further stores a relationship between the identifier and the predetermined range; and
the storage stores the identifier and position information about the wireless access point having the identifier in association with each other, and the predetermined range is set with a position of the wireless access point having the identifier as a reference.

13. The information processing system according to any one of claims 8 to 12, wherein
the identifier is an SSID (service set identifier).

14. An information processing method comprising:
a first step of receiving a wireless access point detection result from a vehicle; and
a second step of providing a service corresponding to an identifier of the wireless access point detected by the vehicle for a driver of the vehicle.

15. The information processing method according to claim 14, wherein at least one of:
at the second step, the service is identified based on service data in which the identifier and content of the service are associated; and
the information processing method, further comprises a third step of acquiring position information about the vehicle, wherein if the position information indicates a position in a predetermined range corresponding to the identifier, the service corresponding to the identifier is provided.
